# EUROPEAN PATENT APPLICATION

(11) **EP 4 808 099 A1**
(43) Date of publication of application: **16.09.2026**
(21) Application number: 25163177.6
(22) Date of filing: 12.03.2025
(51) Int. Cl.: H04N 1/00, H04N 1/32

(54) **IMAGE FORMING APPARATUS**

(71) Applicant: Toshiba TEC Kabushiki Kaisha, Tokyo 141-8562 (JP)
(72) Inventor: KOBAYASHI, Hidenori, Shinagawa-ku, Tokyo, 141-8562 (JP)
(74) Representative: Hoffmann Eitle

(57) **Abstract**

According to one embodiment, an image forming apparatus includes a supply unit, a wireless communication unit, a processor, and an image forming unit. The supply unit supplies a medium to which a plurality of wireless tags are attached. The wireless communication unit wirelessly communicates with the plurality of wireless tags corresponding to a plurality of divided regions of the medium. The processor outputs a signal according to a result of communication with the plurality of wireless tags. The image forming unit forms or does not form an image in each divided region based on the output signal.

## Description

### CROSS-REFERENCE TO RELATED APPLICATION

This application is based upon and claims the benefit of priority from Japanese Patent Application No. 2024-014329, filed on February 1, 2024, the entire contents of which are incorporated herein by reference.

### FIELD

Embodiments described herein relate to an image forming apparatus.

### BACKGROUND

In recent years, wireless tags using a radio frequency identifier (RFID) technique became widespread. RFID technology uses electromagnetic fields to automatically identify and track objects. RFID tags consist of a microchip that stores data and an antenna that communicates with RFID readers. These tags are used in various industries for purposes such as inventory management.

### SUMMARY OF THE INVENTION

One of the objects of the present invention is to improve prior art techniques and overcome at least some of the prior art problems as for instance above illustrated.

According to a first aspect of the invention, it is provided an image forming apparatus comprising: supply unit configured to supply a medium to which a plurality of wireless tags are attached; a wireless communication unit configured to wirelessly communicate with the plurality of wireless tags, the plurality of wireless tags corresponding to a plurality of divided regions of the medium; a processor coupled with the wireless communication unit and configured to output a signal according to a result of the wireless communication with the plurality of wireless tags; and an image forming unit configured to form or to not form an image in each of the plurality of divided regions based on the output signal.

Optionally, in the image forming apparatus of the first aspect of the invention, the supply unit conveys the medium along a sub-scanning direction, the wireless communication unit wirelessly communicates with the plurality of wireless tags, the plurality of wireless tags being arranged along the sub-scanning direction, and the image forming unit forms images in a first divided region of the plurality of divided regions, line by line, along a main scanning direction, the main scanning direction being orthogonal to the sub-scanning direction.

Optionally, in the image forming apparatus of the first aspect of the invention, the result of the wireless communication with the plurality of wireless tags is either a successful communication or a failed communication.

Optionally, in the image forming apparatus of the first aspect of the invention, the processor outputs a first signal for forming an image in a first divided region of the plurality of divided regions of the medium based on the wireless communication unit successfully communicating with a first wireless tag corresponding to the first divided region.

Optionally, in the image forming apparatus of the first aspect of the invention, the processor specifies the first divided region based on information about the first wireless tag included in first reading information when the first reading information is read from the first wireless tag and first writing information is written to the first wireless tag.

Optionally, in the image forming apparatus of the first aspect of the invention, the processor outputs a second signal for not forming an image in a second divided region of the plurality of divided regions of the medium based on the wireless communication unit failing to communicate with a second wireless tag corresponding to the second divided region.

Optionally, in the image forming apparatus of the first aspect of the invention, the processor specifies the second divided region based on information about the second wireless tag included in second reading information when the second reading information is read from the second wireless tag and second writing information is not written to the second wireless tag.

According to a second aspect of the invention, a method of operating an image forming device, comprising: supplying a medium to which a plurality of wireless tags are attached; communicatively couple a wireless communication unit with the plurality of wireless tags, the plurality of wireless tags corresponding to a plurality of divided regions of the medium; receive a result of a wireless communication between the wireless communication unit and the plurality of wireless tags; output a signal according to the result of the wireless communication with the plurality of wireless tags; and form an image on one or more of the plurality of divided regions based on the output signal, or do not form an image on one or more of the plurality of divided regions based on the output signal.

Optionally, the method according to the second aspect of the invention further comprises conveying the medium along a sub-scanning direction; wirelessly communicating, via the wireless communication unit, with the plurality of wireless tags, the plurality of wireless tags being arranged along the sub-scanning direction; and forming images in a first divided region of the plurality of divided regions, line by line, along a main scanning direction, the main scanning direction being orthogonal to the sub-scanning direction.

Optionally, the method according to the second aspect of the invention further comprises outputting a first signal for forming an image in a first divided region of the plurality of divided regions of the medium based on the wireless communication unit successfully communicating with a first wireless tag corresponding to the first divided region.

Optionally, the method according to the second aspect of the invention further comprises specifying the first divided region based on information about the first wireless tag included in first reading information when the first reading information is read from the first wireless tag and first writing information is written to the first wireless tag.

Optionally, the method according to the second aspect of the invention further comprises outputting a second signal for not forming an image in a second divided region of the plurality of divided regions of the medium based on the wireless communication unit failing to communicate with a second wireless tag corresponding to the second divided region.

Optionally, the method according to the second aspect of the invention further comprises specifying the second divided region based on information about the second wireless tag included in second reading information when the second reading information is read from the second wireless tag and second writing information is not written to the second wireless tag.

### DESCRIPTION OF THE DRAWINGS

FIG. 1 is a schematic diagram illustrating an image forming apparatus according to an embodiment;
FIG. 2 is a block diagram illustrating an example of a hardware configuration of the image forming apparatus of FIG. 1;
FIG. 3 is a diagram illustrating an example of a functional block of a processor;
FIG. 4 is a diagram illustrating an example of a medium processed by the image forming apparatus of FIG. 1;
FIG. 5 is a flowchart illustrating an example of communication processing and image formation processing;
FIG. 6 is a diagram illustrating an example of signal output for forming an image corresponding to each divided region on a medium in an image formation process;
FIG. 7 is a diagram illustrating an example of signal output for not forming images corresponding to a part of divided regions on one medium; and
FIG. 8 is a diagram illustrating an example of signal output for forming an image corresponding to a wireless tag on a medium.

### DETAILED DESCRIPTION

An image forming apparatus not only forms one image on one medium to which one wireless tag is attached, but also forms a plurality of images on one medium to which a plurality of wireless tags are attached. In the latter case, one medium may be wasted if information cannot be written regarding one wireless tag among the plurality of wireless tags. Therefore, technical improvements are necessary.

Provided is an image forming apparatus that improves usage efficiency of one medium to which a plurality of wireless tags are attached.

In general, according to one embodiment, an image forming apparatus includes a supply unit, a wireless communication unit, a processor, and an image forming unit. The supply unit supplies a medium to which a plurality of wireless tags are attached. The wireless communication unit wirelessly communicates with the plurality of wireless tags corresponding to a plurality of divided regions of the medium. The processor outputs a signal according to a result of communication between the wireless communication unit and the plurality of wireless tags. The image forming unit forms or does not form an image in each divided region based on the output signal from the processor.

Hereinafter, the image forming apparatus according to an embodiment will be described with reference to the drawings.

### Configuration

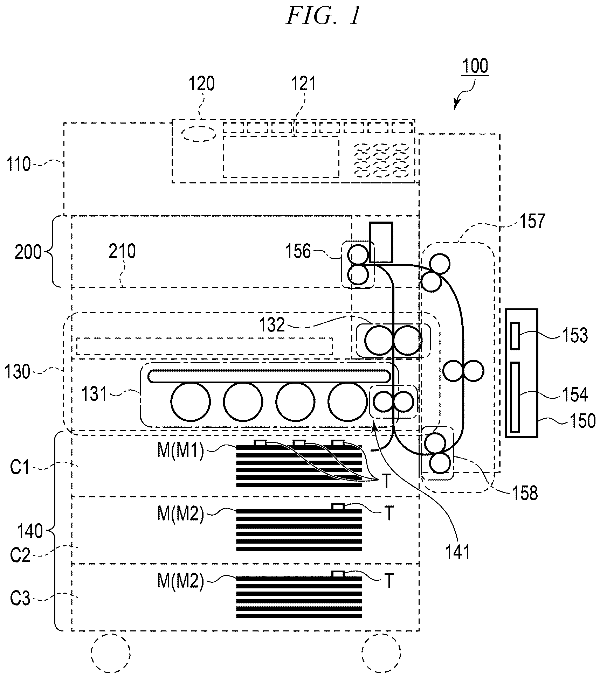

FIG. 1 is a schematic diagram illustrating an example of the image forming apparatus according to an embodiment. An image forming apparatus 100 is, for example, a multi-function peripheral. The image forming apparatus 100 includes an image reading unit 110, a control panel 120, a display 121, an image forming unit 130, a medium containing unit 140, an RFID processing unit 150, and a medium receiving unit 200.

For example, the image forming apparatus 100 forms an image on a sheet-like medium M with a developer such as toner. The medium M is a paper or a label sheet. The medium M may be in any form that allows an image to be formed on the surface thereof.

For example, one or a plurality of wireless tags T are attached to one surface of the medium M. The wireless tags T are tags using RFID technique and are also referred to as RFID tags. For example, a medium M1 is a medium to which a plurality of wireless tags T are attached. A medium M2 is a medium to which one wireless tag T is attached. The media M1 and M2 are collectively referred to as the medium M.

The wireless tag T stores tag identification information that uniquely identifies the wireless tag T (for example, unique identifier (UID)), and optionally stores tag management information. The tag management information includes a medium type code, tag position information, and a total number of tags. The tag position information indicates positions of the tags in one medium M. The total number of tags indicates a total number of tags attached to one medium M. Note that at least one of the wireless tag T and the image forming apparatus 100 needs to store the tag management information. For example, when the image forming apparatus 100 stores the tag management information, the tag management information is managed using a tag type code included in the tag identification information, and the tag management information stored by the image forming apparatus 100 is associated with the tag identification information stored in the wireless tag T.

The display 121 is an image display device such as a liquid crystal display or an organic electro luminescence (EL) display. The display 121 displays various kinds of information related to the image forming apparatus 100.

The control panel 120 includes a plurality of buttons (e.g., hard keys, levers, switches, touch sensitive buttons, etc.). The control panel 120 receives an operation of a user. The control panel 120 outputs a signal corresponding to the operation performed by the user to a processor of the image forming apparatus 100. The control panel 120 and the display 121 may be configured as an integrated touch sensitive panel.

The image reading unit 110 includes an optical line sensor that faces a manuscript placed on a manuscript stand. The image reading unit 110 scans the manuscript with the optical line sensor, reads an image from the manuscript with an arrangement direction of optical elements of the optical line sensor set as a main scanning direction and a direction orthogonal to the main scanning direction set as a sub-scanning direction. Then, the image reading unit 110 generates and outputs image information based on a reading result.

The image forming unit 130 is an image forming unit that forms an image on the supplied medium M, based on the image information generated by the image reading unit 110 or the image information received via an external interface 164. That is, the image forming unit 130 forms images in divided regions E line by line along the main scanning direction orthogonal to the sub-scanning direction in which the medium M is conveyed. The image forming unit 130 forms an image by, for example, the following processing. The image forming unit 130 forms an electrostatic latent image on a photosensitive drum based on the image information. The image forming unit 130 forms a visible image by adhering a developer to the electrostatic latent image. A specific example of the developer is toner. The image forming unit 130 transfers the visible image onto the medium M. The image forming unit 130 fixes a visible image on the medium M by applying heat and pressure to the medium M.

The medium M, on which the image is formed, may be a medium M contained in the medium containing unit 140, or may be a manually inserted medium M. The medium M on which the image is formed is ejected to the medium receiving unit 200.

The medium containing unit 140 contains the medium M used for image formation in the image forming unit 130. The medium containing unit 140 includes one or a plurality of cassettes. In the present embodiment, the medium containing unit 140 includes cassettes C1, C2, and C3 (e.g., drawers, trays, etc.). For example, the cassette C1 contains a plurality of media M1 to which a plurality of wireless tags T are attached respectively. The cassettes C2 and C3 contain a plurality of media M2 to which a single wireless tag T is attached respectively.

The image forming apparatus 100 may store cassette management information in which cassette identification information assigned to each cassette is associated with medium type information of media contained in each cassette. The medium type information includes a medium type code. The above-mentioned tag management information includes the medium type code. Therefore, the cassette management information is associated with the tag management information based on the medium type code. In this way, the image forming apparatus 100 is able to detect tag positions and a total number of tags of the medium M contained in a specific cassette.

The image reading unit 110 is an image acquisition unit that acquires an image. The image reading unit 110 reads image information of a reading target based on brightness and darkness of light. The image reading unit 110 records the read image information. The recorded image information may be transmitted to another information processing apparatus via a network. Further, the image forming unit 130 may form the recorded image information as an image on the medium M.

Next, the inside of the image forming apparatus 100 will be described in detail. The image forming apparatus 100 includes a supply unit 141, an ejection unit 156, and a reversal path 157. The reversal path 157 includes a registration unit 158.

The image forming unit 130 includes an image transfer unit 131 and a fixing unit 132. The image transfer unit 131 includes one or more types of toners. For example, the image transfer unit 131 includes yellow, cyan, magenta, and black toners from the upstream side (the left side in the drawing). The predetermined toner may be a special toner such as a decolorable toner. The image transfer unit 131 includes a developing unit, a photosensitive drum, and a charging unit for each toner.

The charging unit uniformly charges a surface (photosensitive layer) of the photosensitive drum. The photosensitive drum is irradiated with laser light and carries an electrostatic latent image on a surface thereof. The developing unit adds a toner to the electrostatic latent image and develops the electrostatic latent image into a visible image.

The image transfer unit 131 includes a transfer belt. Images developed with respective toners are sequentially superimposed on and transferred to the transfer belt. The superimposed images are then transferred to the medium M by the transfer roller.

The present embodiment describes a method of causing the image forming unit 130 to form an image by an intermediate transfer method as described above. However, a direct transfer method or other transfer methods may be used.

The fixing unit 132 includes a heating roller and a pressure roller. The heating roller applies heat to the medium M from one side of the medium M. The pressure roller applies pressure to the medium M from the other side of the medium M. The fixing unit 132 fixes the toner transferred to the medium M by applying heat and pressure to the medium M.

The supply unit 141 supplies the medium M from a cassette in the medium containing unit 140. The supply unit 141 includes a plurality of supply rollers, and conveys the medium M along the sub-scanning direction by the plurality of supply rollers. The medium M supplied by the supply unit 141 passes through a communication region. For example, the supply unit 141 temporarily stops or decelerates a specific supply roller, thereby temporarily stopping or decelerating the medium M when passing through the communication region. For example, the specific supply roller may be a registration roller.

The ejection unit 156 ejects the medium M conveyed inside the image forming apparatus 100. The ejection unit 156 is configured with an ejection roller.

The reversal path 157 is a path that reverses the front and back of the medium M, and is used to form images on both sides of the medium M. The reversal path 157 is a path that reverses the medium M conveyed to the ejection unit 156 through switchback and conveys the medium M.

The registration unit 158 is provided on the reversal path 157. In some embodiments, the registration unit 158 is described as a registration roller provided most downstream of the reversal path 157. The registration unit 158 temporarily stops the conveyance of the medium M. By stopping the conveyance of the medium M, the registration unit 158 corrects an inclination of the medium M to be perpendicular to a conveyance direction. The location of the registration unit 158 is not limited to the most downstream of the reversal path 157. The registration unit 158 may be any location as long as the registration unit 158 is a registration roller provided on a path between the ejection unit 156 and the reversal path 157.

The RFID processing unit 150 is a wireless communication unit that wirelessly communicates with the wireless tag T of the medium M passing through the communication region located between the supply unit 141 and the medium receiving unit 200. For example, the RFID processing unit 150 is provided outside the reversal path 157. The RFID processing unit 150 includes a controller referred to as an RFID module 153, an antenna board 154, and an interface unit. For example, an antenna formed on the antenna board 154 receives information from the wireless tag T of the medium M being conveyed from the medium containing unit 140 or the manual feeding tray and passing through the communication region and transmits information to be written to the wireless tag T by wireless communication. For example, the antenna wirelessly communicates with the wireless tag T of the medium M passing through the supply roller of the supply unit 141.

The medium receiving unit 200 receives the medium M ejected from the ejection unit 156. The medium receiving unit 200 includes a tray 210.

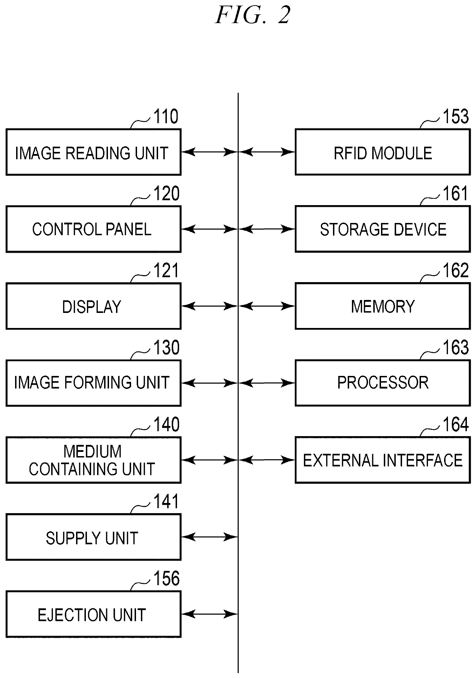

FIG. 2 is a block diagram illustrating an example of a hardware configuration of the image forming apparatus according to an embodiment. The image forming apparatus 100 includes the image reading unit 110, the control panel 120, the display 121, the image forming unit 130, the medium containing unit 140, the supply unit 141, the ejection unit 156, the RFID module 153, a storage device 161, a memory 162, a processor 163, and the external interface 164.

The medium containing unit 140 contains the medium M to which the wireless tag T is attached. The medium containing unit 140 includes the cassettes C1, C2, and C3.

The supply unit 141 is a mechanism that feeds the medium M contained in the medium containing unit 140 to the image forming unit 130. Hereinafter, the RFID module 153, the storage device 161, the memory 162, the processor 163, and the external interface 164 will be described. Note that each functional unit is connected such that the functional units are capable of data communication via a system bus 170.

The storage device 161 may be, for example, a hard disk or a solid state drive (SSD), and stores various kinds of data. The various kinds of data are print jobs received from an external communication device and software programs for controlling actions of each functional unit of the image forming apparatus 100. The print job includes image information to be printed on the medium M. The storage device 161 stores various kinds of management information.

The memory 162 temporarily stores data used by each functional unit of the image forming apparatus 100. The memory 162 includes a volatile memory and a non-volatile memory. The memory 162 stores digital data generated by the image reading unit 110. The memory 162 may temporarily store a print job being printed by the image forming unit 130 and writing information to be written to the wireless tag. The memory 162 stores various kinds of management information.

The processor 163 is a control unit that controls the actions of each functional unit of the image forming apparatus 100. The processor 163 loads the software program stored in the storage device 161 onto the memory 162 and executing processing by executing the software program. Here, an example of the processing executed by the processor 163 will be described.

The processor 163 controls printing on the medium M to which the wireless tag is attached based on the print job received via the external communication device or the control panel 120. When the processor 163 receives the print job for the medium M to which the wireless tag is attached, the processor 163 acquires writing information designated in the print job and image information associated with the writing information from a writing information server or the like. The image information associated with the writing information is information about an image to be formed on the medium M. Note that the image information does not need to be associated with the writing information. Here, the print job includes the image information.

The processor 163 controls the supply unit 141 such that the supply unit 141 supplies (e.g., transfers, provides, etc.) the medium M. The supply unit 141 supplies the medium M to each unit based on the control of the processor 163. The processor 163 controls the ejection unit 156 such that the ejection unit 156 ejects the medium M. The ejection unit 156 ejects the medium M to the medium receiving unit 200 based on the control of the processor 163.

The processor 163 controls the image forming unit 130. The image forming unit 130 forms an image indicated by the image information on the medium M. The medium M on which the image is formed is ejected to the medium receiving unit 200.

The processor 163 controls the RFID module 153. The RFID module 153 includes a calculation device and a storage device. The RFID module 153 writes information to the wireless tag attached to the medium M. The RFID module 153 reads information from the wireless tag attached to the medium M. The information read by the RFID module 153 from the wireless tag includes, for example, tag identification information that uniquely identifies the wireless tag (for example, unique identifier (UID)).

The external interface 164 is an image acquisition unit that acquires image information and transmits and receives data to and from the external device. The external device is, for example, an information processing device such as a personal computer, a tablet computer, or a smart device. The external interface 164 receives data or instructions transmitted from the external device. The instruction transmitted from the external device is a print job and the like (e.g., a user command to print a particular image, document, etc.). The data transmitted from the external device is writing information and image information associated with the writing information, and the like. The external interface 164 acts as an output interface and transmits data to the external device.

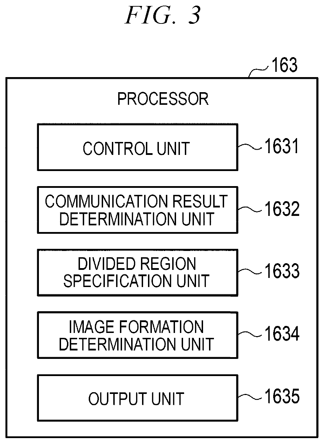

FIG. 3 is a diagram illustrating an example of functional blocks of the processor of the image forming apparatus according to an embodiment. As illustrated in FIG. 3, the processor 163 includes a control unit 1631, a communication result determination unit 1632, a divided region specification unit 1633, an image formation determination unit 1634, and an output unit 1635. The processor 163 implements functions of the units by executing the programs stored in the storage device 161.

The control unit 1631 controls all actions of the image forming apparatus 100. For example, the control unit 1631 determines whether there is an image formation job. When the image formation job is received, the control unit 1631 controls the functional units to the image forming apparatus to execute the received image formation job.

The communication result determination unit 1632 determines a result of communication between the RFID module 153 and one or a plurality of wireless tags T attached to the supplied medium M. The communication result determination unit 1632 determines whether information is read from the wireless tag T and whether information is written to the wireless tag T.

The divided region specification unit 1633 specifies a plurality of divided regions of the supplied medium M based on information obtained from the plurality of wireless tags T attached to the supplied medium M. The divided region specification unit 1633 specifies a predetermined divided region of the supplied medium M corresponding to a predetermined wireless tag T based on tag management information read from the predetermined wireless tag T.

The image formation determination unit 1634 determines whether to form an image in each divided region based on the communication result. For example, when the image formation determination unit 1634 is able to read information from a predetermined wireless tag T and write information to the predetermined wireless tag T, the image formation determination unit 1634 determines that an image should be formed in a predetermined divided region corresponding to the predetermined wireless tag T. When the image formation determination unit 1634 is able to read information from the predetermined wireless tag T but is unable to write information to the predetermined wireless tag T, the image formation determination unit 1634 determines to that an image should not be formed in a predetermined divided region corresponding to the predetermined wireless tag T.

The output unit 1635 outputs a first signal for forming an image or a second signal for not forming an image based on the determination result.

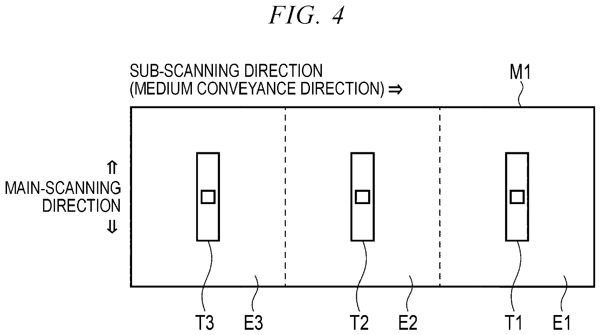

FIG. 4 is a diagram illustrating an example of a medium processed by the image forming apparatus according to an embodiment. The medium M1 includes wireless tags T1, T2, and T3. The wireless tags T1, T2, and T3 are arranged along the sub-scanning direction that is the direction in which the medium M1 is conveyed. The medium M1 includes divided regions E1, E2, and E3 corresponding to the wireless tags T1, T2, and T3. Note that the divided regions E1, E2, and E3 are collectively referred to as divided regions E.

In the example described herein, a medium M1 includes three wireless tags and three divided regions. However, the numbers are not limited as long as there are a plurality of wireless tags T and the number of divided regions E corresponds to the number of wireless tags. Note that, although it is assumed that boundaries and the like between the divided regions E in the supplied medium M1 are not provided, the boundaries and the like may be provided (e.g., by a user, a manufacturer, etc.).

The supply unit 141 conveys the media M1 and M2 in the sub-scanning direction orthogonal to the main scanning direction as a medium conveyance direction.

For example, the RFID processing unit 150 restricts a communication range and sequentially communicates with individual wireless tags T of the conveyed medium M1. The RFID processing unit 150 restricts the communication range by narrowing an output of radio waves transmitted from the antenna to a predetermined range or narrowing a directivity of the radio waves to a predetermined range. The communication range may be limited by a slit disposed between the antenna and the wireless tag. The processor 163 is able to sequentially form images or not form images on a plurality of divided regions E corresponding to a plurality of wireless tags T using the communication results with the wireless tags T sequentially acquired.

Alternatively, the RFID processing unit 150 may collectively communicate with the plurality of wireless tags T of the conveyed medium M1. The processor 163 recognizes a positional relationship between the plurality of wireless tags T arranged on the medium M1 and the plurality of divided regions E corresponding to the plurality of wireless tags T based on tag management information read from the wireless tags T or tag management information stored in the storage device 161 or the like. The processor 163 is able to sequentially form images or not form images on a plurality of divided regions E corresponding to a plurality of wireless tags T using the recognized positional relationship and the results of communication with the plurality of wireless tags T.

### Actions

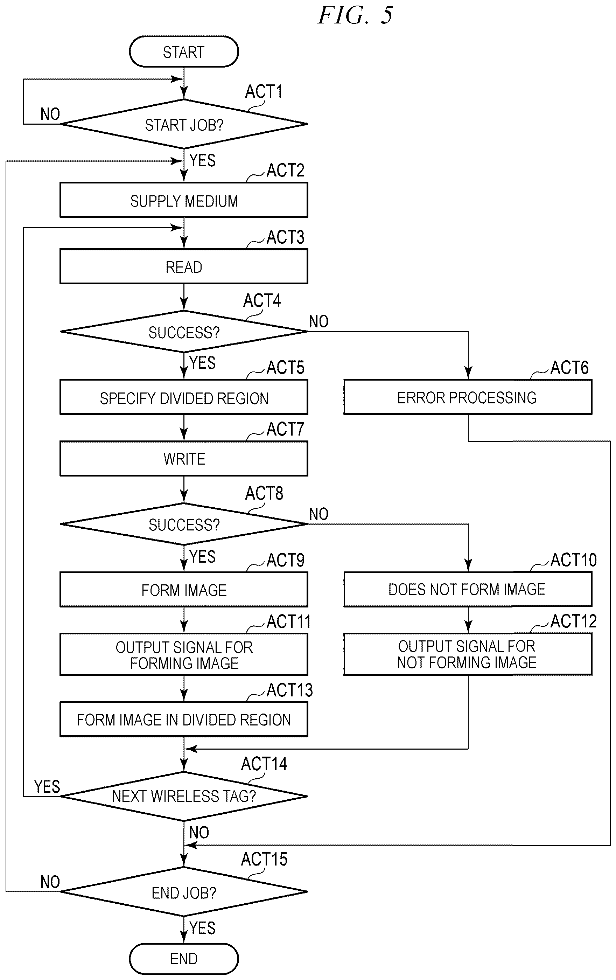

FIG. 5 is a flowchart illustrating an example of communication processing and image formation processing according to an embodiment. The control unit 1631 determines whether there is an image formation job (ACT 1). When the control unit 1631 receives an image formation job based on image information generated by the image reading unit 110 or image information received via the external interface 164, the control unit 1631 starts the received image formation job (ACT 1, YES).

The control unit 1631 detects an action timing for forming an image on the medium M based on the received image formation job, and controls actions of each unit. The image formation job may be a job indicating image formation on one medium M1 or M2, or may be a job indicating a series of image formation on a plurality of media M1 or M2. Hereinafter, a description will be given of the processing of a job indicating a series of image formation on a plurality of media M1.

The supply unit 141 supplies the medium M1 based on the action timing for forming an image of the received image formation job (ACT 2).

The RFID processing unit 150 sequentially and wirelessly communicates with the plurality of wireless tags T1 to T3 corresponding to the plurality of divided regions E1 to E3 of the medium M1 according to a timing at which the medium M1 passes through the communication region. First, the RFID processing unit 150 communicates with the wireless tag T1 and reads the information of the wireless tag T1 (ACT 3). The RFID processing unit 150 transmits/outputs the communication data to a communication result determination unit 1632. The communication result determination unit 1632 determines whether information reading is successful based on the result of communication between the RFID processing unit 150 and the wireless tag T1 (ACT 4) (e.g., whether the wireless communication unit/RFID processing unit successfully communicated with the wireless tag). In this way, the RFID processing unit 150 and the processor 163, or more specifically, the communication result determination unit, are communicatively coupled with one another.

If the information reading fails (ACT 4, NO), the control unit 1631 executes error processing (ACT 6). For example, by the error processing, the ejection unit 156 ejects the medium M1 being supplied, the control unit 1631 temporally stops the image formation job, and the display 121 outputs information about communication error.

When the information reading is successful (ACT 4, YES), the divided region specification unit 1633 specifies the divided region E1 on the medium M1 based on the tag identification information and the like included in the read information (ACT 5). For example, the divided region specification unit 1633 specifies the divided region E1 based on the tag management information included in the read information or the tag management information stored in the storage device 161 in addition to the tag identification information (ACT 5). The tag management information includes tag position information and a total number of tags associated with the medium M1.

When the divided region E1 is specified, the RFID processing unit 150 writes information to the wireless tag T1 (ACT 7). The communication result determination unit 1632 determines whether information writing is successful based on the communication result from the RFID processing unit 150 (ACT 8).

If the information writing is successful (ACT 8, YES), the image formation determination unit 1634 determines to form an image in the divided region E1 (ACT 9). When the information writing fails (ACT 8, NO) (e.g., the wireless communication unit/RFID processing unit failed to communicate with the wireless tag), the image formation determination unit 1634 determines that an image should not be formed in the divided region E1 (ACT 10).

The output unit 1635 outputs a signal according to the communication result. That is, when it is determined to form an image in the divided region E1, the output unit 1635 outputs a signal for forming an image in the divided region E1 (ACT 11). The image forming unit 130 forms the designated image in the divided region E1 based on the output signal (ACT 13).

When it is determined that an image should not be formed in the divided region E1, the output unit 1635 outputs a signal for not forming an image in the divided region E1 (ACT 12). The image forming unit 130 does not form an image in the divided region E1 based on the output signal from the output unit 1635.

When the control unit 1631 ends processing based on communication with the wireless tag T1 and detects presence of the next wireless tag T2 in the medium M1 based on the tag management information (ACT 14, YES), the processing in and after ACT 3 is continuously performed on the wireless tag T2. When the control unit 1631 ends processing based on communication with the wireless tag T2 and detects presence of the next wireless tag T3 in the medium M1 based on the tag management information (ACT 14, YES), then the processing in and after ACT 3 is continuously performed on the wireless tag T3.

When the control unit 1631 detects absence of the next wireless tag TX in the medium M1 (ACT 14, NO), the ejection unit 156 ejects the medium M1 after ending the processing based on the communication with the wireless tags T1, T2, and T3 of the medium M1.

When image formation based on the image formation job being executed remains, the control unit 1631 continues the image formation job (ACT 15, NO). The supply unit 141 supplies the medium M again (ACT 2).

When all processing based on the job being executed ends, the control unit 1631 ends the job (ACT 15, YES), transitions to a standby mode, and waits for another image formation job. If the standby mode ends, all actions end (e.g., the image forming apparatus 100 is turned off).

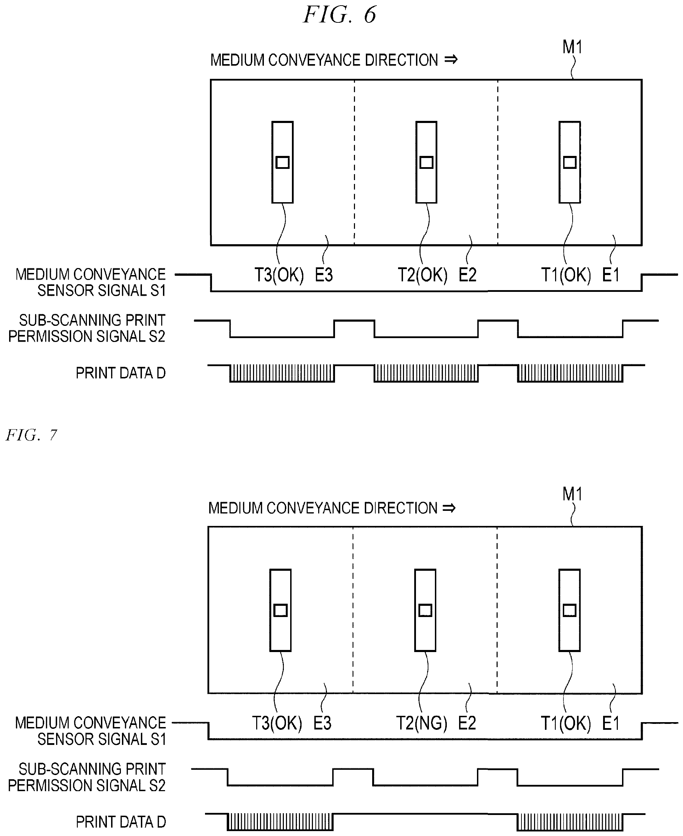

FIG. 6 is a diagram illustrating an example of signal output by the processor 163, or more specifically, the output unit 1635, for forming an image corresponding to each divided region on a medium during an image formation process, according to an embodiment. FIG. 7 is a diagram illustrating an example of a signal output by the processor 163, or more specifically, the output unit 1635, for not forming images corresponding to a part of divided regions on one medium during the image formation process, according to an embodiment.

The supply unit 141 conveys the medium M1 and detects the medium M1 being conveyed through the communication region of the RFID processing unit 150. For example, the supply unit 141 includes a sensor, and the sensor may output a medium conveyance sensor signal S1 of which a level changes corresponding to a detection period and a non-detection period of the medium M1 being conveyed through the communication region.

The output unit 1635 outputs the medium conveyance sensor signal S1, a sub-scanning print permission signal S2 synchronized with each divided region E, and print data D based on the result of communication between the RFID processing unit 150 and the wireless tag T and the tag management information including the tag position information and the like.

As illustrated in FIG. 6, the output unit 1635 outputs the sub-scanning print permission signal S2 of a first level and the print data D for forming a predetermined image during an image forming period for the divided region E1 corresponding to the wireless tag T1 based on the success in writing of information to the wireless tag T1. The output unit 1635 outputs the sub-scanning print permission signal S2 of the first level and the print data D for forming the predetermined image during an image formation period in the divided region E2 corresponding to the wireless tag T2 based on the success in writing of information to the wireless tag T2. The output unit 1635 outputs the sub-scanning print permission signal S2 of the first level and the print data D for forming a predetermined image during an image formation period in the divided region E3 corresponding to the wireless tag T3 based on the success in writing of information to the wireless tag T3.

The image forming unit 130 activates an exposure action based on the print data D during an output period of the sub-scanning print permission signal S2 of the first level and forms a predetermined image based on the print data D. In this way, a predetermined image is thereby formed in each of the divided regions E1, E2, and E3. Note that the same images, different images, or a combination thereof may be formed in the divided regions E1, E2, and E3.

When writing of information to the wireless tags T1 and T3 is successful but writing of information to the wireless tag T2 fails (e.g., as illustrated in FIG. 7) the output unit 1635 outputs each signal (e.g., a sub-scanning print permission signal, a medium conveyance sensor signal, etc.). That is, the output unit 1635 outputs the sub-scanning print permission signal S2 of the first level and outputs print data for not forming a predetermined image during the image formation period in the divided region E2,corresponding to the wireless tag T2, based on the failure in writing of information to the wireless tag T2. For example, the print data for not forming a predetermined image may be print data that forms a white image. As a result, a predetermined image is not formed in the divided region E2.

Alternatively, when writing of information to the wireless tags T1 and T3 is successful but writing of information to the wireless tag T2 fails, the output unit 1635 may output a sub-scanning print permission signal S2 of a second level during the image formation period in the divided region E2 corresponding to the wireless tag T2. The image forming unit 130 deactivates the exposure action based on the print data D during an output period of the sub-scanning print permission signal S2 of the second level, thereby not forming an image during the output period. In other words, an image is not formed in the divided region E2 even when the print data D is output during the output period.

As described above, the image forming apparatus 100 forms or does not form an image in each divided region E based on a signal corresponding to the result of communication with the plurality of wireless tags T corresponding to the plurality of divided regions E on one medium.

For example, the processor 163 reads first reading information from a first wireless tag T corresponding to a first divided region E on one medium and writes first writing information to the first wireless tag T. When reading and writing are successful, the processor 163 specifies the first divided region E based on the tag management information about the first wireless tag T included in the first reading information and outputs a signal for forming an image in the first divided region E. As a result, the image forming unit 130 forms an image in the first divided region E based on the output signal.

The processor 163 reads second reading information from a second wireless tag T corresponding to a second divided region E on one medium and writes second writing information to the second wireless tag T. When reading is successful and writing fails, the processor 163 specifies the second divided region E based on the tag management information about the second wireless tag T included in the second reading information, and outputs a signal for not forming an image in the second divided region E. As a result, the image forming unit 130 does not form an image in the second divided region E based on the output signal.

Advantageously, the image forming apparatus 100 is able to improve usage efficiency of one medium to which a plurality of wireless tags T are attached. When a plurality of wireless tags T are attached to one medium and errors occur in a part of the wireless tags T, the whole medium is not wasted. By cutting the medium according to a plurality of divided regions E, product tags having a small size can be generated. Even when one wireless tag is attached to one medium having a small size and it is desired to generate a product tag having a small size, the image forming apparatus 100 may not support such a small size such that it is difficult to process a small-sized medium.

In the above description, the image formation determination unit 1634 determines whether to form an image or to not form an image in each divided region E on one medium M, but the present embodiment is not limited thereto. When writing information to at least one wireless tag T in one medium M fails, the image formation determination unit 1634 may determine to not form images in all divided regions E of the medium M. As a result, the image forming unit 130 does not form images in all divided regions of the medium M.

Alternatively, when information writing to the wireless tag T1 is successful, the image formation determination unit 1634 may determine to form a first image in the divided region E1 corresponding to the wireless tag T1 for which writing is successful. When information writing to the wireless tag T2 fails, the image formation determination unit 1634 may determine to form a second image in the divided region E2 corresponding to the wireless tag T2 for which writing fails. In this way, the image forming unit 130 thereby forms the first image in the divided region E1 corresponding to the wireless tag T1 for which writing is successful and forms the second image in the divided region E2 corresponding to the wireless tag T2 for which writing fails. By using the first image as management information of the product to which the wireless tag T2 is attached and the second image as the error information, it is possible to visually distinguish between a product tag in the divided region E1 and a product tag in the divided region E2.

When information writing to the wireless tag T fails, the control unit 1631 may register tag identification information of the wireless tag T for which writing fails in an error list stored on the memory 162, regardless of whether an image is formed in the divided region E corresponding to the wireless tag T for which writing fails. For example, a product tag used in units of the divided region E is attached to a product or the like. The wireless tag reader reads tag identification information from a wireless tag attached to the product tag. Then, an information management device (e.g., a PC) determines whether the error list includes the read tag identification information. When the error list includes the read tag identification information, the information management device outputs product tag error. Accordingly, the wireless tags T in which writing fails can be managed.

The medium receiving unit 200 of the image forming apparatus 100 may include a plurality of trays. The image forming apparatus 100 may switch an ejection destination of the medium M depending on the communication result. For example, the ejection unit 156 ejects the medium M1 to a first tray when writing to all the wireless tags T is successful and images are formed in all the divided regions in the medium M1 as illustrated in FIG. 6. The ejection unit 156 ejects the medium M1 to a second tray when writing to at least one wireless tag T fails and an image is not formed in at least one divided region in the medium M1 as illustrated in FIG. 7. A user is able to distinguish and receive the medium M1 on which images are formed in all the divided regions and the medium M1 on which an image is not formed in at least one divided region. This allows users to work efficiently.

The image forming apparatus 100 is able to process the medium M2 to which one wireless tag T is attached. Consequently, the image forming apparatus 100 is able to execute processing corresponding to the supplied medium M1 or M2.

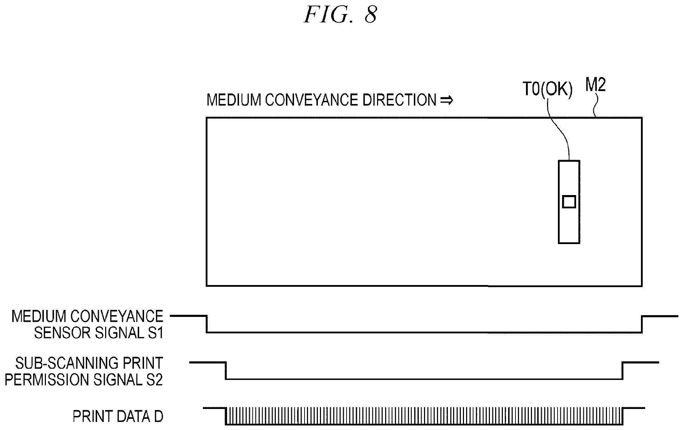

FIG. 8 is a diagram illustrating an example of signal output for forming an image corresponding to one wireless tag on one medium in the image formation process, according to an embodiment. The supply unit 141 conveys the medium M2 and detects the medium M2 being conveyed through the communication region of the RFID processing unit 150. For example, the sensor of the supply unit 141 outputs a medium conveyance sensor signal S1 of which a level changes corresponding to a detection period and a non-detection period of the medium M2 being conveyed through the communication region.

The output unit 1635 outputs the sub-scanning print permission signal S2 and the print data D synchronized with the medium conveyance sensor signal S1 based on the result of communication between the RFID processing unit 150 and the wireless tag T. As illustrated in FIG. 8, the output unit 1635 outputs the sub-scanning print permission signal S2 of the first level and the print data D for forming the predetermined image during an image forming period in a region corresponding to a wireless tag T0 (the entire medium M2) based on the success in information writing to the wireless tag T0. The image forming unit 130 activates the exposure action based on the print data D during an output period of the sub-scanning print permission signal S2 of the first level and forms the predetermined image based on the print data D. Thereby causing the predetermined image to be formed on a region of the medium M2.

While certain embodiments have been described, these embodiments have been presented by way of example onl, and are not intended to limit the scope of the inventions. Indeed, the novel embodiments described herein may be embodied in a variety of other forms; furthermore, various omissions, substitutions and changes in the form of an embodiments described herein may be made without departing from the scope of the inventions. The accompanying claims and their equivalents are intended to cover such forms or modifications as would fall within the scope of the inventions.

## Claims

1. An image forming apparatus comprising:
a supply unit configured to supply a medium to which a plurality of wireless tags are attached;
a wireless communication unit configured to wirelessly communicate with the plurality of wireless tags, the plurality of wireless tags corresponding to a plurality of divided regions of the medium;
a processor coupled with the wireless communication unit and configured to output a signal according to a result of the wireless communication with the plurality of wireless tags; and
an image forming unit configured to form or to not form an image in each of the plurality of divided regions based on the output signal.

2. The image forming apparatus of claim 1, wherein:
the supply unit conveys the medium along a sub-scanning direction,
the wireless communication unit wirelessly communicates with the plurality of wireless tags, the plurality of wireless tags being arranged along the sub-scanning direction, and
the image forming unit forms images in a first divided region of the plurality of divided regions, line by line, along a main scanning direction, the main scanning direction being orthogonal to the sub-scanning direction.

3. The image forming apparatus of claim 1 or 2, wherein the result of the wireless communication with the plurality of wireless tags is either a successful communication or a failed communication.

4. The image forming apparatus of any of claims 1 to 3, wherein the processor outputs a first signal for forming an image in a first divided region of the plurality of divided regions of the medium based on the wireless communication unit successfully communicating with a first wireless tag corresponding to the first divided region.

5. The image forming apparatus of claim 4, wherein the processor specifies the first divided region based on information about the first wireless tag included in first reading information when the first reading information is read from the first wireless tag and first writing information is written to the first wireless tag.

6. The image forming apparatus of any of claims 1 to 5, wherein the processor outputs a second signal for not forming an image in a second divided region of the plurality of divided regions of the medium based on the wireless communication unit failing to communicate with a second wireless tag corresponding to the second divided region.

7. The image forming apparatus of claim 6, wherein the processor specifies the second divided region based on information about the second wireless tag included in second reading information when the second reading information is read from the second wireless tag and second writing information is not written to the second wireless tag.

8. A method of operating an image forming device, comprising:
supplying a medium to which a plurality of wireless tags are attached;
communicatively couple a wireless communication unit with the plurality of wireless tags, the plurality of wireless tags corresponding to a plurality of divided regions of the medium;
receive a result of a wireless communication between the wireless communication unit and the plurality of wireless tags;
output a signal according to the result of the wireless communication with the plurality of wireless tags; and
form an image on one or more of the plurality of divided regions based on the output signal, or
do not form an image on one or more of the plurality of divided regions based on the output signal.

9. The method of claim 8, further comprising:
conveying the medium along a sub-scanning direction;
wirelessly communicating, via the wireless communication unit, with the plurality of wireless tags, the plurality of wireless tags being arranged along the sub-scanning direction; and
forming images in a first divided region of the plurality of divided regions, line by line, along a main scanning direction, the main scanning direction being orthogonal to the sub-scanning direction.

10. The method of claim 8 or 9, further comprising outputting a first signal for forming an image in a first divided region of the plurality of divided regions of the medium based on the wireless communication unit successfully communicating with a first wireless tag corresponding to the first divided region.

11. The method of claim 10, further comprising specifying the first divided region based on information about the first wireless tag included in first reading information when the first reading information is read from the first wireless tag and first writing information is written to the first wireless tag.

12. The method of any of claims 8 to 11, further comprising outputting a second signal for not forming an image in a second divided region of the plurality of divided regions of the medium based on the wireless communication unit failing to communicate with a second wireless tag corresponding to the second divided region.

13. The method of claim 12, further comprising specifying the second divided region based on information about the second wireless tag included in second reading information when the second reading information is read from the second wireless tag and second writing information is not written to the second wireless tag.
